# EUROPEAN PATENT SPECIFICATION

(11) **EP 1 953 061 B1**
(45) Date of publication and mention of the grant of the patent: **15.08.2012**
(21) Application number: 08250200.6
(22) Date of filing: 16.01.2008
(51) Int. Cl.: F16H 61/12, B60W 10/02, B60W 40/105

(54) **Vehicle with a variable transmission and a unit to detect abnormality in the speed detection system**
Fahrzeug mit einem stufenlosen Getriebesystem und einem Regler für die Ermittlung von Fehlern in dem System für die Messung der Geschwindigkeit
Véhicule avec une transmission variable et une unité de détection d'anomalies du système de détection de la vitesse

(30) Priority: 31.01.2007 JP 2007021242; 22.11.2007 JP 2007302501
(43) Date of publication of application: 06.08.2008
(73) Proprietor: Yamaha Hatsudoki Kabushiki Kaisha, Iwata-shi, Shizuoka 438-8501 (JP)
(72) Inventor: Noguchi, Takeharu, Iwata-shi Shizuoka-ken 438-8501 (JP)
(74) Representative: Moreland, David

(56) References cited:
- EP-A- 1 710 143
- GB-A- 2 321 507

## Description

### FIELD OF THE INVENTION

The present invention relates to a vehicle, a controller for a vehicle, and a method for detecting a vehicle abnormality.

### BACKGROUND TO THE INVENTION

Various methods for detecting an abnormality of a vehicle speed sensor have been proposed. For example, JP-A-Hei 10-18896 discloses a method for detecting an abnormality of a vehicle speed sensor based on a throttle opening and a vehicle speed detected by the vehicle speed sensor.

Specifically, as shown in FIG. 8, the method for detecting an abnormality of the vehicle speed sensor, described in JP-A-Hei 10-18896, includes the first step S101 of checking whether or not an engine speed sensor and a throttle opening sensor are normal. If the throttle opening sensor and the like are determined as normal, the method proceeds to step S102 to determine whether or not a shift lever is positioned at a drive range, and whether or not the throttle opening is equal to or greater than a predetermined opening. If the shift lever is determined to be positioned at the drive range and the throttle opening is determined to be equal to or greater than the predetermined opening, the method proceeds to step S103 to determine whether or not the vehicle speed sensor detects a vehicle speed of 0km/h. If the vehicle speed sensor detects a vehicle speed of 0km/h, the method proceeds to step S104 to determine whether or not the engine speed decreases at a given rate. Then, if the engine speed is determined to decrease at a given rate, the method proceeds to step S105 to determine whether or not the throttle opening is constant. If the determination result shows that the throttle opening is constant, there is determined to be a failure in the vehicle speed sensor and in the wiring connected to the vehicle speed sensor.

JP-A-Hei 10-18896 describes that the aforementioned method allows accurate determination whether there is a failure in the vehicle detection system.

Electronic continuously variable transmissions (hereinafter referred to as "ECVT") are known.

Generally, in the ECVT-mounted vehicle, a change-gear ratio is controlled based on the vehicle speed and the throttle opening. Thus, when an abnormality occurs in the vehicle speed detection system for detecting a vehicle speed, there may be a possibility of selecting an improper change-gear ratio. This may result in a difficulty for a vehicle to achieve its suitable driving. Therefore, for the ECVT-mounted vehicle, the need for early detection of an abnormality in the vehicle speed detection system has intensified.

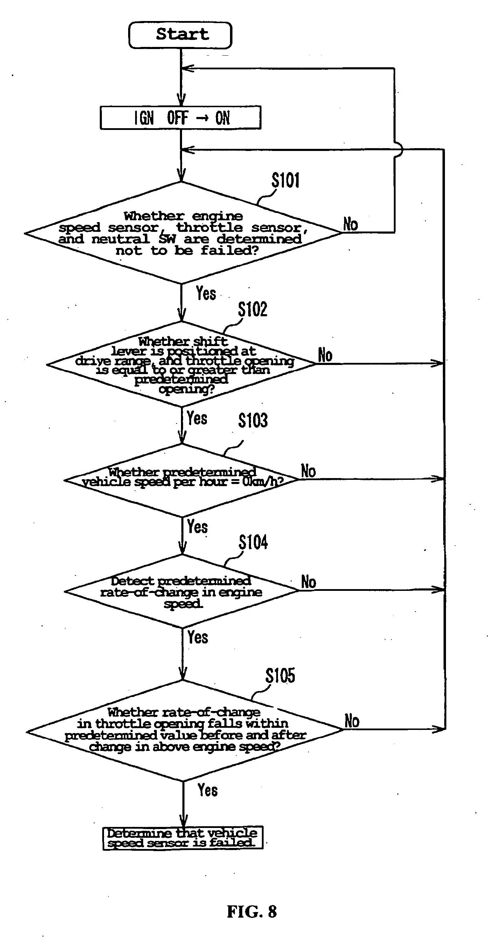

However, as shown in FIG. 8, unless the throttle opening is equal to or greater than a predetermined opening, no abnormality is detected in the vehicle speed detection system by using the method for detecting an abnormality, described in JP-A-Hei 10-18896. Thus, an abnormality in the vehicle speed detection system cannot be detected early enough.

A sensor malfunction detection system is described in GB 2 321 507. This system describes monitoring revolution speed values using sensors to determine whether an engine revolution speed sensor, a continuously variable transmission (CVT) input axle revolution speed sensor, or a CVT output axle revolution speed sensor has failed, according to detected values from the sensors and a detected value of the instantaneous gear ratio. If three predetermined correlations are established, all of the sensors are determined to be normally operated. If any one or two of the three correlations are not established, the failure one of the three sensors is identified. The three correlation are: (1) NE = NPRI; (2) NPRI = NSEC x CN; and (3) NE = NPRI x CN, where NE is the engine revolution speed, NPRI is the input axle revolution speed, CN is the gear ratio, and NSEC is the output axle revolution speed.

The present invention is derived from the foregoing problems, and an object of the invention is to provide a vehicle having an ECVT, which enables early detection of an abnormality in a vehicle speed detection system.

### SUMMARY OF THE INVENTION

A vehicle according to a first aspect of the invention includes: a drive wheel; a driving source for producing a rotational force; a continuously variable transmission; a vehicle speed detection system; and a control unit. The continuously variable transmission has an input shaft and an output shaft. The input shaft is connected to the driving source. The output shaft is connected to the drive wheel. In the continuously variable transmission, a change-gear ratio between the input shaft and the output shaft is electronically controlled. The vehicle speed detection system outputs a vehicle speed signal. The control unit detects an abnormality in the vehicle speed detection system based on at least one of a rotational speed of the driving source, a rotational speed of the input shaft, and a rotational speed of the output shaft, as well as based on the vehicle speed signal outputted from the vehicle speed detection system.

A vehicle according to a second aspect of the invention includes: a drive wheel; a driving source for producing a rotational force; a continuously variable transmission; a vehicle speed detection system; a rotational speed sensor; and a control unit. The continuously variable transmission has an input shaft connected to the driving source and an output shaft connected to the drive wheel. In the continuously variable transmission, a change-gear ratio between the input shaft and the output shaft is electronically controlled. The vehicle speed detection system outputs a vehicle speed signal. The rotational speed sensor detects a rotational speed of the driving source, a rotational speed of the input shaft, or a rotational speed of the output shaft. The control unit detects an abnormality in the vehicle speed detection system, when the rotational detected by the rotational speed sensor is equal to or higher than a predetermined rotational speed, and no vehicle speed signal has been substantially outputted from the vehicle speed detection system for a given period of time.

A vehicle according to a third aspect of the invention includes: a drive wheel; a driving source for producing a rotational force; a continuously variable transmission; a vehicle speed detection system; a rotational speed sensor; and a control unit. The continuously variable transmission has an input shaft connected to the driving source and an output shaft connected to the drive wheel. In the continuously variable transmission, a change-gear ratio between the input shaft and the output shaft is electronically controlled. The vehicle speed detection system detects a vehicle speed. The vehicle speed detection system outputs the detected vehicle speed as a vehicle speed signal. The rotational speed sensor detects a rotational speed of the driving source, a rotational speed of the input shaft, or a rotational speed of the output shaft. The control unit detects an abnormality in the vehicle speed detection system, when a value, obtained by dividing the vehicle speed by the rotational speed detected by the rotational speed sensor, is kept equal to or smaller than a predetermined value for a given period of time.

A controller according to the invention is a controller for a vehicle having: a drive wheel; a driving source for producing a rotational force; a continuously variable transmission; and a vehicle speed detection system for outputting a vehicle speed signal. The continuously variable transmission has an input shaft connected to the driving source and an output shaft connected to the drive wheel. In the continuously variable transmission, a change-gear ratio between the input shaft and the output shaft is electronically controlled.

The controller according to the invention detects an abnormality in the vehicle speed detection system based on at least one of a rotational speed of the driving source, a rotational speed of the input shaft, and a rotational speed of the output shaft, as well as based on the vehicle speed signal outputted from the vehicle speed detection system.

A method for detecting a vehicle abnormality according to the invention is a method for detecting an abnormality in a vehicle having: a drive wheel; a driving source for producing a rotational force; a continuously variable transmission; and a vehicle speed detection system for outputting a vehicle speed signal. The continuously variable transmission has an input shaft connected to the driving source and an output shaft connected to the drive wheel. In the continuously variable transmission, a change-gear ratio between the input shaft and the output shaft is electronically controlled.

The method for detecting a vehicle abnormality according to the invention includes detecting an abnormality in the vehicle speed detection system based on at least one of a rotational speed of the driving source, a rotational speed of the input shaft, and a rotational speed of the output shaft, as well as based on the vehicle speed signal outputted from the vehicle speed detection system.

Further aspects of the present invention are set forth in the independent claims.

Preferred features of the invention are set forth in the dependent claims.

The present invention achieves a vehicle with an ECVT mounted, which enables early detection of an abnormality in the vehicle speed detection system.

### BRIEF DESCRIPTION OF THE DRAWINGS

These and other aspects of the present invention will now be described, by way of example only, with reference to the accompanying drawings, in which:
FIG. 1 is a side view of a two-wheeled motorized vehicle embodying the present invention;
FIG. 2 is a sectional view of an engine unit;
FIG. 3 is a partial sectional view illustrating a construction of an ECVT;
FIG. 4 is a block diagram illustrating a system for controlling the two-wheeled motorized vehicle;
FIG. 5 is a block diagram illustrating sheave position control;
FIG. 6 is a flowchart illustrating a method for determining if an abnormality exists in a vehicle speed detection system and full stall limit control;
FIG. 7 is a block diagram illustrating a control system in accordance with the second embodiment; and
FIG. 8 is a flowchart illustrating a method for detecting an abnormality of a vehicle speed sensor, which is described in prior art reference JP-A-Hei 10-18896.

### DETAILED DESCRIPTION OF THE DRAWINGS

### Embodiment 1

The present inventors found, as a consequence of devoting themselves to the study of the conventional method for detecting an abnormality, that it is difficult for a vehicle having an ECVT to detect an abnormality in the vehicle speed detection system early enough. So, the present inventors continued a further devoted study, and found that a difficulty in detecting an abnormality in the vehicle speed detection system early enough is caused by defining a throttle opening as a condition for detecting an abnormality in the vehicle speed detection system. This allowed them to come to be successful in inventing the present embodiment.

A method for detecting an abnormality in a vehicle speed detection system according to the present embodiment of the invention is characterized by detecting an abnormality in the vehicle speed detection system based on at least one of a rotational speed of a driving source, a rotational speed of an input shaft, and a rotational speed of an output shaft, as well as based on a vehicle speed signal outputted from the vehicle speed detection system. Specifically, if at least one of the rotational speed of the driving source, the rotational speed of the input shaft, and the rotational speed of the output shaft is equal to or higher than a predetermined rotational speed, and if no vehicle speed signal has been substantially outputted from the vehicle speed detection system for a given period of time, an abnormality in the vehicle speed detection system is detected.

This method allows an abnormality in the vehicle speed detection system to be detected independent of the throttle opening. Thus, an abnormality in the vehicle speed detection system is detected at an early stage.

In the specification of the present invention, the condition "the vehicle speed is substantially zero" refers to a vehicle speed at which a vehicle is determined to be substantially at a halt. In other words, the condition "the vehicle speed is substantially zero" refers to a vehicle speed at which a vehicle is determined not to be substantially running. Specifically, an upper limit of the vehicle speed determined to "be substantially zero" may be preset as appropriate within a speed range of 10km/h or lower. For example, the condition "the vehicle speed is substantially zero" may be defined as a vehicle speed, detected by the vehicle speed detection system, of 5km/h or lower. Alternatively, for example, the condition "the vehicle speed is substantially zero" may be defined as a vehicle speed, detected by the vehicle speed detection system, of 2km/h or lower.

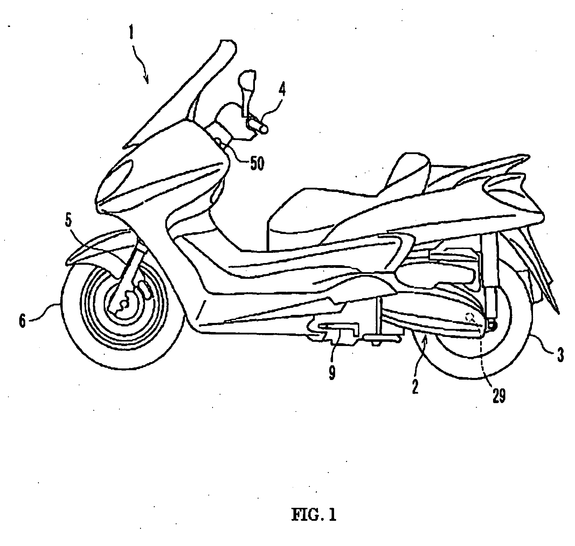

An example of the preferred embodiment of the present invention will be hereinafter described in detail, using a two-wheeled motorized vehicle 1 shown in FIG. 1. The embodiment of the present invention is described by using a so-called scooter-type two-wheeled motorized vehicle 1 as an example. However, a vehicle in the invention is not limited to the so-called scooter-type two-wheeled motorized vehicle. For example, the vehicle in the present invention may be a two-wheeled motorized vehicle other than scooter-type vehicle. Specifically, the vehicle in the invention may be an off-road type, a motorcycle type, a scooter type or a so-called moped type two-wheeled motorized vehicle. Also, other than a two-wheeled motorized vehicle, the vehicle in the invention may be a straddle-type vehicle. Specifically, the vehicle in the invention may be an all terrain vehicle (ATV) or other types of vehicle. Further, the vehicle in the invention may be a vehicle other than straddle type vehicle, such as a four-wheeled motorized vehicle.

FIG. 1 shows a side view of a two-wheeled motorized vehicle 1. The two-wheeled motorized vehicle 1 has a body frame (not shown). An engine unit 2 is suspended from the body frame. A rear wheel 3 is provided at a rear end of the engine unit 2. In the embodiment of the invention, the rear wheel 3 forms a drive wheel for driving a wheel with power outputted from the engine unit 2.

The body frame has a head pipe (not shown) extending downward from steering handlebars 4. Front forks 5 are connected to a bottom end of the head pipe. A front wheel 6 is rotatably attached to lower ends of the front forks 5. The front wheel 6, not connected to the engine unit 2, forms a driven wheel.

A center stand 9, which is designed to hold the two-wheeled motorized vehicle 1 with the drive wheel or the rear wheel 3 lifted off the ground, is attached to the body frame.

A caution lamp 50 is provided at a location where a rider seated on the two-wheeled motorized vehicle 1 can view. Specifically, the caution lamp 50 is provided on a front panel of the two-wheeled motorized vehicle 1.

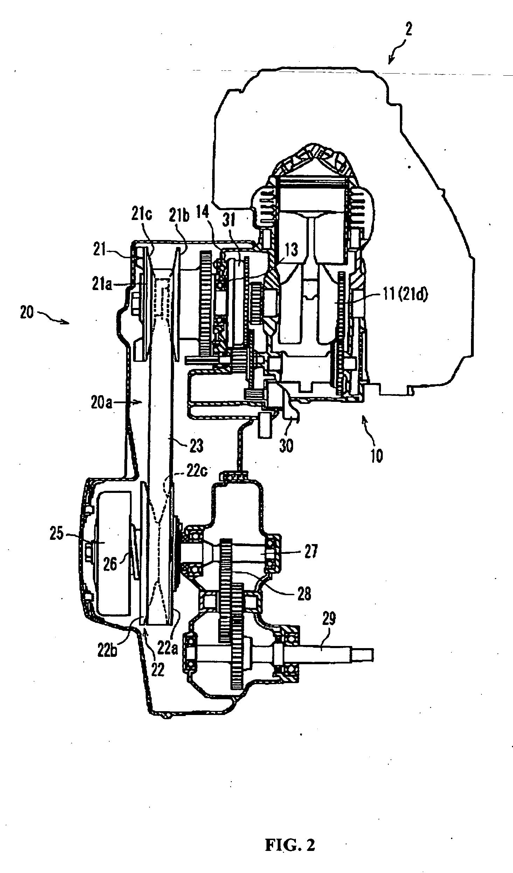

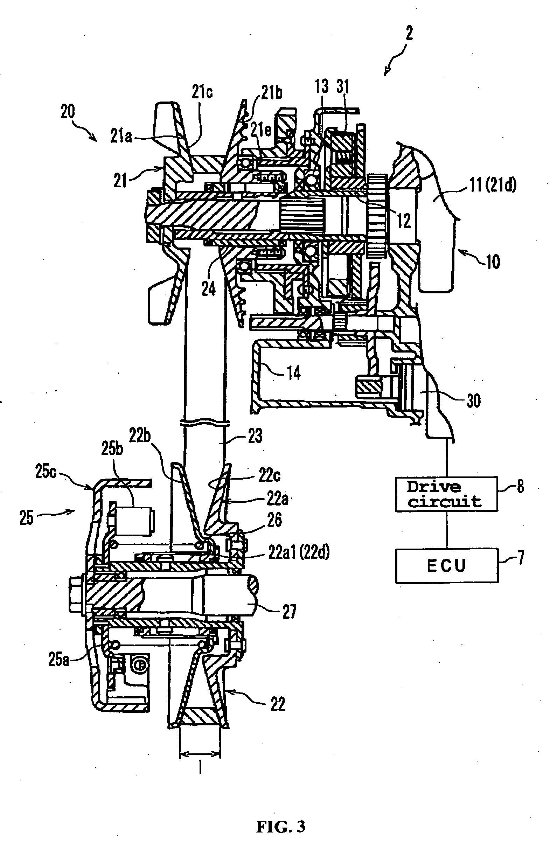

The construction of the engine unit 2 will now be described with reference to FIGs. 2 and 3.

As shown in FIGs. 2 and 3, the engine unit 2 has an engine (internal combustion engine) 10 for producing a rotational force and a continuously variable transmission 20. In the embodiment of the invention, the engine 10 is described as a forced-air-cooled four-stroke engine. However, the engine 10 may be other type of engine. For example, the engine 10 may be a water-cooled engine. The engine 10 may be a two-stroke engine. In addition, the engine 10 may be replaced or supplemented with another driving source, such as electric motor.

As shown in FIG. 3, the engine 10 has a crankshaft 11. A sleeve 12 is spline-fitted onto an outer circumference of the crankshaft 11. The sleeve 12 is rotatably supported by a housing 14 via a bearing 13. A one-way clutch 31 connected to a motor 30 is mounted onto an outer circumference of the sleeve 12.

The continuously variable transmission 20 includes a change-gear or transmission mechanism 20a, an ECU 7 as a control unit for controlling the change-gear mechanism 20a, and a drive circuit 8. In the embodiment of the invention, the change-gear mechanism 20a is described as a belt-type ECVT as one example. However, the change-gear mechanism 20a is not limited to a belt-type ECVT. For example, the change-gear mechanism 20a may be a toroidal type ECVT.

The change-gear mechanism 20a is provided with a primary sheave 21, a secondary sheave 22 and a V-belt 23. The V-belt 23 is wrapped around the primary sheave 21 and the secondary sheave 22. The V-belt 23 is approximately V-shape in cross-section. The type of the V-belt is not specified. It may be a rubber belt type, resin block belt type, or the like.

The primary sheave 21 is connected to the crankshaft 11 as an input shaft 21d. The primary sheave 21 rotates together with the crankshaft 11. The primary sheave 21 includes a fixed sheave half 21a and a movable sheave half 21b. The fixed sheave half 21a is fixed to one end of the crankshaft 11. The movable sheave half 21b is located opposed to the fixed sheave half 21a. The movable sheave half 21b is movable in the axial direction of the crankshaft 11. One surface of the fixed sheave half 21a and one surface of the movable sheave half 21b are opposed to each other, which form a belt groove 21c into which the V-belt 23 is wrapped. The belt groove 21c is formed wider toward the radially outer side of the primary sheave 21.

As shown in FIG. 3, the movable sheave half 21b has a cylindrical boss 21e through which the crankshaft 11 passes. A cylindrical slider 24 is fixed to an inner side of the boss 21e. The movable sheave half 21b integral with the slider 24 are movable in the axial direction of the crankshaft 11. Accordingly, a width of the belt groove 21c is variable.

The width of the belt groove 21c of the primary sheave 21 is varied when the motor 30 actuates the movable sheave 21b in the axial direction of the crankshaft 11. That is, the continuously variable transmission 20 is an ECVT in which the change-gear ratio is electronically controlled. In the embodiment of the invention, the motor 30 is driven by pulse width modulation (PWM drive). However, the method for driving the motor 30 is not particularly limited to the PWM drive. For example, the motor 30 may be driven by pulse-amplitude modulation. Additionally, the electric motor 30 may be a step motor type.

The secondary sheave 22 is located at the rear of the primary sheave 21. The secondary sheave 22 is mounted to a driven shaft 27 via a centrifugal clutch 25. To be more specific, the secondary sheave 22 includes a fixed sheave half 22a and a movable sheave half 22b. The movable sheave half 22b is opposed to the fixed sheave half 22a. The fixed sheave half 22a includes a cylindrical portion 22a1. In the embodiment of the invention, the cylindrical portion 22a1 forms an output shaft 22d of the continuously variable transmission 20. The fixed sheave half 22a is connected to the driven shaft 27 via the centrifugal clutch 25. The movable sheave half 22b is movable in the axial direction of the driven shaft 27. One surface of the fixed sheave half 22a and one surface of the movable sheave half 22b are opposed to each other, which form a belt groove 22c into which the V-belt 23 is wrapped. The belt groove 22c is formed wider toward the radially outer side of the secondary sheave 22.

The movable sheave half 22b is urged by a spring 26 in the direction that a width of the belt groove 22c decreases. In view of this, when the motor 30 is driven, and the width of the belt groove 21c of the primary sheave 21 decreases, a diameter with which the V-belt 23 is wrapped around the primary sheave 21 increases, while the V-belt 23 on the side of the secondary sheave 22 is pulled radially inward. Thus, the movable sheave half 22b moves against the urging force of the spring 26 in the direction that the width of the belt groove 22c increases. Therefore, the diameter with which the V-belt 23 is wrapped around the secondary sheave 22 decreases. This results in a change in change-gear ratio of the change-gear mechanism 20a.

The centrifugal clutch 25 is engaged or disengaged depending on a rotational speed of the cylindrical portion 22a1 as the output shaft 22d included in the fixed sheave half 22a. That is, if the rotational speed of the output shaft 22d is below a predetermined rotational speed, the centrifugal clutch 25 is disengaged. Thus, rotation of the fixed sheave half 22a is not transmitted to the driven shaft 27. In contrast, if the rotational speed of the output shaft 22d is equal to or higher than a predetermined rotational speed, the centrifugal clutch 25 is engaged. Thus, rotation of the fixed sheave half 22a is transmitted to the driven shaft 27.

As shown in FIG. 3, the centrifugal clutch 25 includes a centrifugal plate 25a, a centrifugal weight 25b, and a clutch housing 25c. The centrifugal plate 25a rotates together with the fixed sheave half 22a. That is, the centrifugal plate 25a rotates together with the output shaft 22d. The centrifugal weight 25b is supported by the centrifugal plate 25a such that it is displaceable in the radial direction of the centrifugal plate 25a. The clutch housing 25c is fixed to one end of the driven shaft 27. A speed reducing mechanism 28 is connected to the driven shaft 27. The driven shaft 27 is connected to an axle 29 via the speed reducing mechanism 28. The rear wheel 3 is mounted to the axle 29. Therefore, the clutch housing 25c is connected to the drive wheel or the rear wheel 3 via the driven shaft 27, the speed reducing mechanism 28 and the axle 29.

The clutch housing 25c engages with or disengages from the centrifugal plate 25a depending on the rotational speed of the output shaft 22d. Specifically, if the rotational speed of the output shaft 22d is equal to or higher than a predetermined rotational speed, the centrifugal weight 25b uses a centrifugal force to move toward the radially outer side of the centrifugal plate 25a to contact the clutch housing 25c. This allows the centrifugal plate 25a and the clutch housing 25c to engage with each other. When the centrifugal plate 25a and the clutch housing 25c engage with each other, rotations of the output shaft 22d are transmitted to the drive wheel or the rear wheel 3 through the clutch housing 25c, the driven shaft 27, the deceleration mechanism 28, and the axle 29. In contrast, if the rotational speed of the output shaft 22d is below a predetermined rotational speed, the centrifugal force applied to the centrifugal weight 25b decreases, so that the centrifugal weight 25b moves away from the clutch housing 25c. Therefore, rotations of the output shaft 22d are not transmitted to the clutch housing 25c. Consequently, the rear wheel 3 does not rotate.

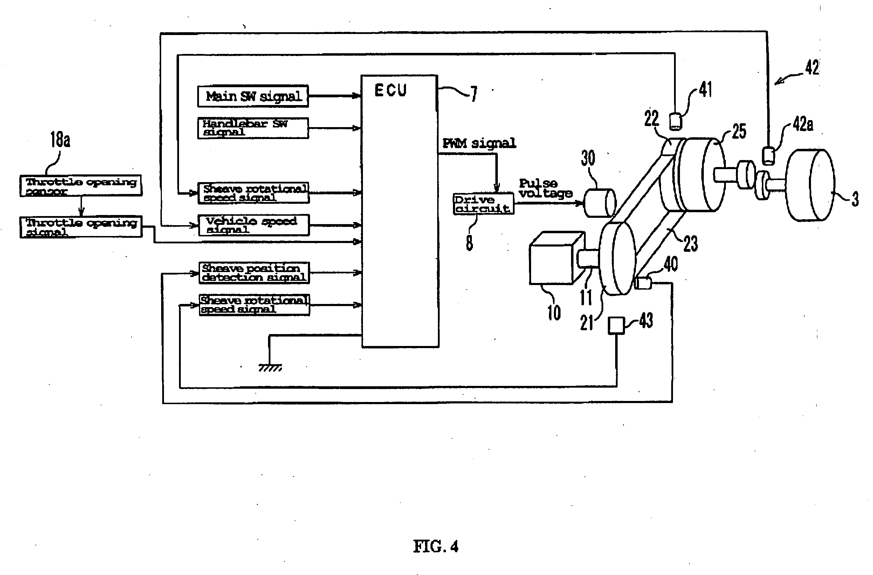

A system for controlling the two-wheeled motorized vehicle 1 will now be described in detail with reference to FIG. 4.

As shown in FIG. 4, a sheave position sensor 40 is connected to the ECU 7. The sheave position sensor 40 detects a position of the movable sheave half 21b of the primary sheave 21 relative to the fixed sheave half 21a. In other words, the sheave position sensor 40 detects a distance (I) between the fixed sheave half 21a and the movable sheave half 21b in the axial direction of the crankshaft 11. The sheave position sensor 40 outputs the detected distance (I) to the ECU 7 as a sheave position detection signal. The sheave position sensor 40 may be formed by a potentiometer, for example.

In addition, a primary sheave rotation sensor 43, a secondary sheave rotation sensor 41, and a vehicle speed sensor 42a are connected to the ECU 7. The primary sheave rotation sensor 43 detects a rotational speed of the primary sheave 21 and outputs it to the ECU 7. In the embodiment of the invention, the rotational speed of the primary sheave 21 is equal to the rotational speed of the input shaft 21d of the continuously variable transmission 20. The rotational speed of the primary sheave 21 is also equal to the rotational speed of the engine 10 as a driving source. Thus, in the embodiment of the invention, the rotational speed of the engine 10 and the rotational speed of the input shaft 21d are both detected by the primary sheave rotation sensor 43.

A secondary sheave rotation sensor 41 detects a rotational speed of the secondary sheave 22. The secondary sheave rotation sensor 41 outputs the detected rotational speed of the secondary sheave 22 to the ECU 7 as a sheave rotational speed signal. In the embodiment of the invention, the rotational speed of the secondary sheave 22 is equal to the rotational speed of the output shaft 22d. Thus, in the embodiment of the invention, the rotational speed of the output shaft 22d is detected by the secondary sheave rotation sensor 41.

The vehicle speed sensor 42a detects a rotational speed of the rear wheel 3. The vehicle speed sensor 42a outputs a vehicle speed signal to the ECU 7 based on the detected rotational speed. In the embodiment of the invention, the vehicle speed sensor 42a, the wiring for connecting the vehicle speed sensor 42a and the ECU 7, and the like form a vehicle speed detection system 42.

A handlebar switch attached to the steering handlebars 4 is connected to the ECU 7. The handlebar switch outputs a handlebar SW signal when a rider operates the handlebar switch.

A throttle opening sensor 18a outputs a throttle opening signal to the ECU 7.

The ECU 7 conducts feedback control of the sheave position of the movable sheave half 21b of the primary sheave 21 based on the vehicle speed signal and the like. In other words, the ECU 7 conducts feedback control of the distance (I) based on the vehicle signal and the like.

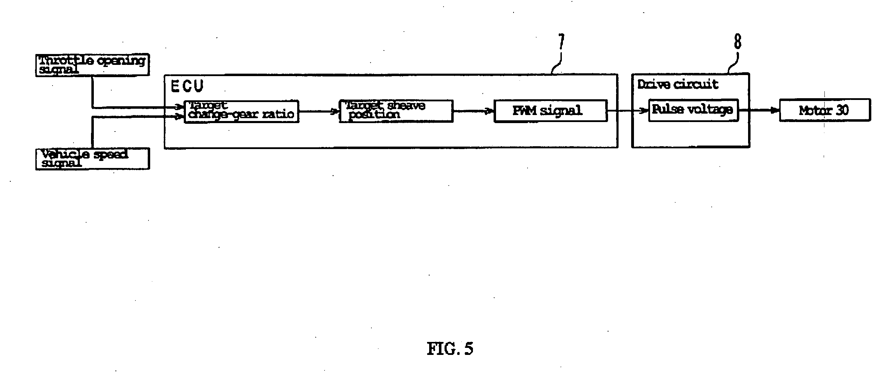

Specifically, as shown in FIG. 5, the ECU 7 determines a target change-gear ratio based on the throttle opening and the vehicle speed. The ECU 7 calculates a target sheave position based on the determined target change-gear ratio. That is, the ECU 7 calculates a target distance "I" between the movable sheave half 21b and the fixed sheave half 21a based on the determined target change-gear ratio. The ECU 7 outputs a pulse-width modulation (PWM) signal to the drive circuit 8 in accordance with the current position of the movable sheave half 21b and the target sheave position in order to displace the movable sheave half 21b to the target sheave position. The drive circuit 8 applies a pulse voltage to the motor 30 in accordance with the PWM signal. Thereby, the movable sheave half 21b is actuated to adjust the change-gear ratio.

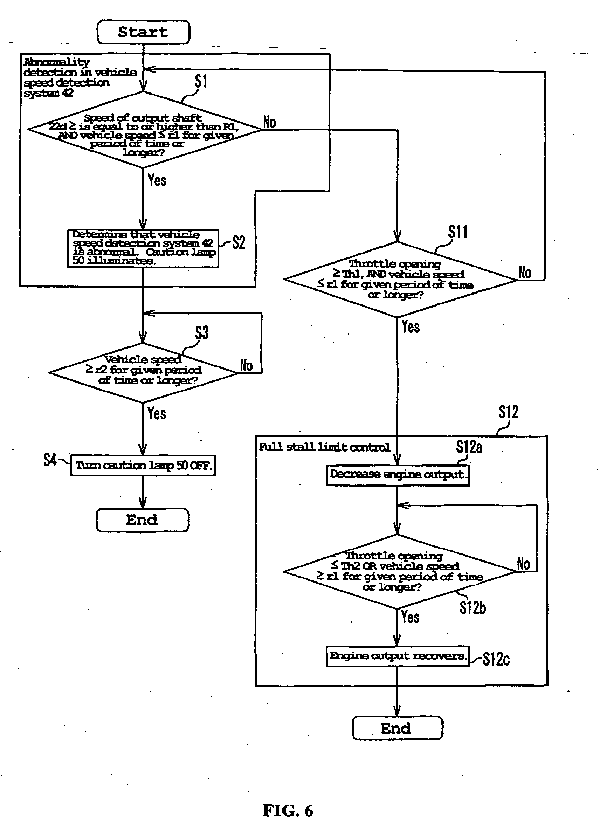

A method for determining if an abnormality exists in the vehicle speed detection system 42 according to the embodiment of the invention will now be described with reference to FIG. 6. As shown in FIG. 6, in the embodiment of the invention, an abnormality in the vehicle speed detection system 42 is detected based on the rotational speed of the output shaft 22d and the vehicle speed signal outputted from the vehicle speed detection system 42. Specifically, an abnormality in the vehicle speed detection system 42 is detected based on the rotational speed of the output shaft 22d, which is detected by the secondary sheave rotation sensor 41, and based on the vehicle speed signal, which is outputted from the vehicle speed detection system 42.

More specifically, in step S1, a determination is made whether or not the rotational speed of the output shaft 22d is equal to or higher than a predetermined rotational speed R₁, and the vehicle speed signal, outputted from the vehicle speed detection system 42, is kept equal to or lower than a predetermined speed r₁ for a given period of time or longer. In other words, a determination is made whether or not no vehicle speed signal has been substantially outputted from the vehicle speed detection system 42 for a given period of time or longer, even though the output shaft 22d rotates at a certain speed or higher so that the vehicle speed signal should be outputted.

Then, in step S1, if the determination is made that the rotational speed of the output shaft 22d is equal to or higher than a predetermined rotational speed R₁, and the vehicle speed signal, outputted from the vehicle speed detection system 42, is kept equal to or lower than a predetermined speed r₁ for a given period of time or longer, the vehicle speed detection system 42 is determined to be abnormal and the caution lamp 50 illuminates in step S2.

As described above, in step S1, the condition "the rotational speed of the output shaft 22d is equal to or higher than a predetermined rotational speed R₁" is defined in order to determine whether or not the rotational speed of the output shaft 22d is equal to or higher than a rotational speed such that a vehicle speed signal is outputted provided that no abnormality exists in the vehicle speed detection system 42. The predetermined rotational speed R₁ may be set as appropriate, depending on the type of the two-wheeled motorized vehicle 1 or the like. In the embodiment of the invention, the centrifugal clutch 25 is located between the output shaft 22d and the drive wheel or the rear wheel 3. Therefore, the predetermined rotational speed R₁ is preferably set at a rotational speed such that the centrifugal clutch 25 is engaged or higher than that rotational speed.

In turn, the predetermined speed r₁ is determined to be a speed at which no vehicle speed signal is substantially outputted from the vehicle speed detection system 42. In other words, the predetermined speed r₁ is determined to be a speed at which the two-wheeled motorized vehicle 1 is substantially at a halt. For example, the predetermined speed r₁ may be set at 1 to 5 km/h.

The "given period of time" for a determination in the step S1 may be set as appropriate, depending on the type of the two-wheeled motorized vehicle 1 or the like. For example, the "given period of time" for a determination in step S1 may be set at approximately 1 to 10 seconds.

Step S2 is followed by step S3. Specifically, in the step S3, a determination is made whether or not the vehicle speed, detected by the vehicle speed detection system 42, is kept equal to or higher than a predetermined vehicle speed r₂ for a given period of time or longer. In other words, a determination is made whether or not the vehicle speed detection system 42 outputs a vehicle speed signal. In step S3, if the determination is made that the vehicle speed, detected by the vehicle speed detection system 42, is kept equal to or higher than a predetermined vehicle speed r₂ for a given period of time or longer, the vehicle speed detection system 42 is determined to be normal. Then, the process of the method proceeds to step S4 to turn the caution lamp 50 OFF. In contrast, in step S3, if the determination is made that the vehicle speed, detected by the vehicle speed detection system 42, is not kept equal to or higher than a predetermined vehicle speed r₂ for a given period of time or longer, the vehicle speed detection system 42 is determined to have been abnormal. Thus, the process of the method goes back to step S3.

The predetermined speed r₂ in step S3 is a value such that the vehicle speed detection system 42 is determined to output a vehicle speed signal. The predetermined speed r₂ may be substantially equal to or different from the predetermined speed r₁ in step S1. As in the case with the given period of time for a determination in step S1, the given period of time for a determination in step S3 may be set as appropriate, depending on the type of the two-wheeled motorized vehicle 1 or the like. For example, the "given period of time" for a determination in step S3 may be set at approximately 1 to 10 seconds.

In step S1, if the determination is not made that the rotational speed of the output shaft 22d is equal to or higher than a predetermined rotational speed R₁, and the vehicle speed signal, outputted from the vehicle speed detection system 42, is kept equal to or lower than a predetermined speed r₁ for a given period of time or longer, the vehicle speed detection system 42 is determined to be normal and the process of the method goes to step S11.

In step S11, a determination is made whether or not the throttle opening is equal to or greater than a predetermined opening Th₁, and the vehicle speed, detected by the vehicle speed detection system 42, is kept equal to or lower than a predetermined speed r₁ for a given period of time or longer. To be more specific, in step S11, a determination is made whether or not the vehicle speed, detected by the vehicle speed detection system 42, is kept equal to or lower than a predetermined speed r₁ for a given period of time or longer, even though the throttle opening is equal to or greater than a predetermined opening Th₁ so that the vehicle speed should be higher than the predetermined speed r₁. That is, in step S11, a determination is made whether or not the centrifugal clutch 25 is slipping due to some cause, so that no power is transmitted from the engine 10 to the drive wheel or the rear wheel 3. In the step S11, if the centrifugal clutch 25 is determined to be slipping, the process of the method goes to step S12 to conduct full stall limit control. In contrast, in step S11, if the centrifugal clutch 25 is not determined to be slipping, the process of the method goes back to the step S1.

The "full stall limit control" refers to the condition in which the brake is applied to the rear wheel 3 although the throttle is opened by the rider, in order to prevent the centrifugal clutch 25 from continuing to slip. Particularly, the "full stall limit control" is designed to prevent the centrifugal weight 25b and the clutch housing 25c of the centrifugal clutch 25 from sliding with a large friction force and from wearing out.

The predetermined speed r₁ in step S11 is equal to the predetermined speed r₁ in step S1. The predetermined opening Th₁ may be set as appropriate, depending on the type of the two-wheeled motorized vehicle 1. As in the case with the given period of time for a determination in step S1, the given period of time for a determination in step S11 may be set as appropriate, depending on the type of the two-wheeled motorized vehicle 1 or the like. For example, the "given period of time" for a determination in the step S11 may be set at approximately 1 to 10 seconds.

Specifically, in step S12, the output of the engine 10 is decreased first as step S12a. For example, the engine 10 may be stopped. The output of the engine 10 may be decreased in any manner without restriction. For example, the output of the engine 10 may be decreased by reducing the amount of fuel to be supplied to the engine 10, or by retarding the ignition timing in the engine 10.

Step S12a is followed by step S12b. Specifically, in the step S12b, a determination is made whether or not the throttle opening is equal to or smaller than a predetermined opening Th₂ or the vehicle speed is kept higher than a predetermined vehicle speed r₁ for a given period of time or longer. Then, in step S12b, if the determination is not made that the throttle opening is equal to or smaller than Th₂ or the vehicle speed is kept higher than a predetermined vehicle speed r₁ for a given period of time or longer, the process of the method returns to step S12b. That is, due to step S12, the output of the engine 10 is kept decreased until the throttle opening is equal to or smaller than a predetermined opening Th₂ or the vehicle speed is higher than a predetermined vehicle speed r₁. In other words, the output of the engine 10 is kept decreased until the centrifugal clutch 25 is stopped from slipping. Then, in step S12b, if the determination is made that the throttle opening is equal to or smaller than Th₂ or the vehicle speed is kept higher than a predetermined vehicle speed r₁ for a given period of time or longer, the process of the method proceeds to step S12c to cause the output of the engine 10 to recover to a level prior to step S12a of decreasing the output of the engine 10.

The predetermined opening Th₂ in step S12b may be equal to or different from the predetermined opening Th₁ in step S11. In addition, the predetermined speed r₁ in step S12b may be equal to or different from the predetermined speed r₁ in step S1. As in the case with the given period of time for a determination in step S1, the given period of time for a determination in step S12b may be set as appropriate, depending on the type of the two-wheeled motorized vehicle 1 or the like. For example, the "given period of time" for a determination in step S12b may be set at approximately 1 to 10 seconds.

As described above, the method for detecting an abnormality in the vehicle speed detection system 42 according to the embodiment of the invention does not include the throttle opening and the rate-of-change in rotational speed of the engine 10 as a condition for detecting an abnormality in the vehicle speed detection system 42. Specifically, in the embodiment of the invention, when the rotational speed of the output shaft 22d (= rotational speed of the secondary sheave 22), detected by the secondary sheave rotation sensor 41, is equal to or higher than a predetermined rotational speed R₁, and the vehicle speed, detected by the vehicle speed detection system 42, is kept equal to or lower than a predetermined speed r₁ for a given period of time or longer, an abnormality in the vehicle speed detection system 42 is detected. In other words, when the rotational speed of the output shaft 22d, detected by the secondary sheave rotation sensor 41, is equal to or higher than a predetermined rotational speed R₁, and no vehicle speed signal has been substantially outputted from the vehicle speed detection system 42 for a given period of time or longer, an abnormality in the vehicle speed detection system 42 is detected. This allows earlier detection of an abnormality in the vehicle speed detection system 42, compared to the conventional method.

In the embodiment of the invention, the vehicle speed is detected based on the rotational speed of the drive wheel or the rear wheel 3. Thus, the vehicle speed is detected more accurately, compared to the case, for example, where the vehicle speed is detected based on the rotational speed of the driven wheel or the front wheel 6. This allows more accurate control of the continuously variable transmission 20.

In addition, because the vehicle speed is detected based on the rotational speed of the drive wheel or the rear wheel 3, even when the center stand 9 is used, an abnormality in the vehicle speed detection system 42 is detectable. For example, when the center stand 9 is used, the front wheel 6 does not rotate usually. Thus, in the case that the vehicle speed sensor 42a is attached to the driven wheel or the front wheel 6, the vehicle speed sensor 42a cannot detect abnormality in the vehicle speed detection system 42. In contrast to this, the rear wheel 3 rotates in accordance with the rotational speed of the engine 10 even when the center stand 9 is used, which allows abnormality detection in the vehicle speed detection system 42.

In the continuously variable transmission 20, the change-gear ratio is changeable independent of the rotational speed of the input shaft 21d. Thus, the rotational speed of the output shaft 22d may not be high enough to cause the centrifugal clutch 25 to be engaged, even though the engine 10 and the input shaft 21d rotate at high speeds. In such a case, using the rotational speed of the engine 10 or the rotational speed of the input shaft 21d to detect an abnormality in the vehicle speed detection system 42 can possibly lead to misdetection of an abnormality in the vehicle speed detection system 42 on the basis that the centrifugal clutch 25 is disengaged, even though no abnormality actually exists in the vehicle speed detection system 42. It is conceivable that not only the rotational speed of the engine 10 and the rotational speed of the input shaft 21d, but also the change-gear ratio of the continuously variable transmission 20 are monitored in order to prevent misdetection of an abnormality in the vehicle speed detection system 42. However, this requires a larger number of sensors for controlling the continuously variable transmission. This also complicates the control of the continuously variable transmission, resulting in cost increases.

In contrast to this, in the embodiment of the invention, as a condition for detecting an abnormality in the vehicle speed detection system 42 in step S1, the rotational speed of the output shaft 22d, which decides if the centrifugal clutch 25 is engaged or disengaged, is defined as equal to or higher than a rotational speed R₁. The rotational speed R₁ is preset equal to or higher than a rotational speed at which the centrifugal clutch 25 is engaged. Thus, when the centrifugal clutch 25 is disengaged and the rear wheel 3 is not substantially driven, no abnormality in the vehicle speed detection system 42 is detected. Therefore, there is no possibility of misdetection of an abnormality in the vehicle speed detection system 42 only on the basis that the centrifugal clutch 25 is disengaged. Consequently, an abnormality in the vehicle speed detection system 42 is detected more accurately.

That is, in the case of using the rotational speed of the engine 10 or the rotational speed of the input shaft 21d to detect an abnormality in the vehicle speed detection system 42, the change-gear ratio of the continuously variable transmission 20 needs to be considered for abnormality detection in the vehicle speed detection system 42. However, in the case of using the rotational speed of the output shaft 22d to detect an abnormality in the vehicle speed detection system 42, an abnormality in the vehicle speed detection system 42 is detected more accurately without considering the change-gear ratio of the continuously variable transmission 20 for abnormality detection in the vehicle speed detection system 42.

In view of preventing misdetection of an abnormality in the vehicle speed detection system 42, the rotational speed R₁ may be any value as long as the rotational speed R₁ is equal to or higher than a rotational speed at which the centrifugal clutch 25 is engaged. However, in view of reliable and early detection of an abnormality in the vehicle speed detection system 42, the rotational speed R₁ is preferably equal to a rotational speed at which the centrifugal clutch 25 is engaged. Thereby, immediately after the rotational speed of the output shaft 22d reaches the rotational speed at which the centrifugal clutch 25 is engaged, an abnormality in the vehicle speed detection system 42 is detectable.

In the embodiment of the invention, when an abnormality in the vehicle speed detection system 42 is detected, the caution lamp 50 illuminates. This allows the rider to be informed of an abnormality in the vehicle speed detection system 42 at an early stage. For example, the caution lamp 50 may flash so that the rider can easily recognize.

Incidentally, it is conceivable that an abnormality in the vehicle speed detection system 42 can temporally exist due to poor contact of the wiring for connecting the vehicle speed sensor 42a and the ECU 7. In the embodiment of the invention, after an abnormality in the vehicle speed detection system 42 is detected, when the vehicle speed detection system 42 is determined to have recovered to a normal state in step S3, the caution lamp 50 is turned OFF. Thus, immediately after the vehicle speed detection system 42 has recovered from a temporary abnormal state to a normal state, the rider is informed of this information.

In the embodiment of the invention, in step S1, after the vehicle speed detection system 42 is determined to be normal, if certain conditions defined in step S11 are satisfied, the full stall limit control is conducted in step S12. Thus, the centrifugal clutch 25 is prevented from wearing out. Specifically, the clutch housing 25c and the centrifugal weight 25b are prevented from sliding each other, and therefore, the clutch housing 25c and the centrifugal weight 25b are prevented from wearing out. This results in a longer service life of the centrifugal weight 25b.

In the embodiment of the invention, the full stall limit control in the step S12 is conducted after the vehicle speed detection system 42 is determined to be normal in step S11. Thus, the full stall limit control is conducted properly.

When the centrifugal clutch 25 is stopped from slipping through step S12b and step S12c, the output of the engine 10 recovers to a level that allows normal driving.

For example, it is conceivable that step S1 is skipped, and in step S11, an abnormality in the vehicle speed detection system 42 is detected in addition to detection of a slippage of the centrifugal clutch 25. That is, it is conceivable that step S1 is skipped, and if the determination is made in step S11 that the throttle opening is equal to or greater than a predetermined opening Th₁, and the vehicle speed, detected by the vehicle speed detection system 42, is equal to or lower than a predetermined vehicle speed r₁, then an abnormality in the vehicle speed detection system 42 is detected in addition to detection of a slippage of the centrifugal clutch 25. However, in such a case, a slippage of the centrifugal clutch 25 and an abnormality in the vehicle speed detection system 42 are undesirably detected at the same time. Thus, the rider cannot clearly recognize which of the abnormality in the vehicle speed detection system 42 or the slippage of the centrifugal clutch 25 causes a decrease in output of the engine 10.

In contrast to this, in the embodiment of the invention, after a determination is made whether an abnormality exists in the vehicle speed detection system 42 in step S1, step S11 is performed. That is, the slippage of the centrifugal clutch 25 and the abnormality in the vehicle speed detection system 42 are individually detected in separate processes. This allows the rider to surely determine if an abnormality exists in the vehicle speed detection system 42.

### Embodiment 2

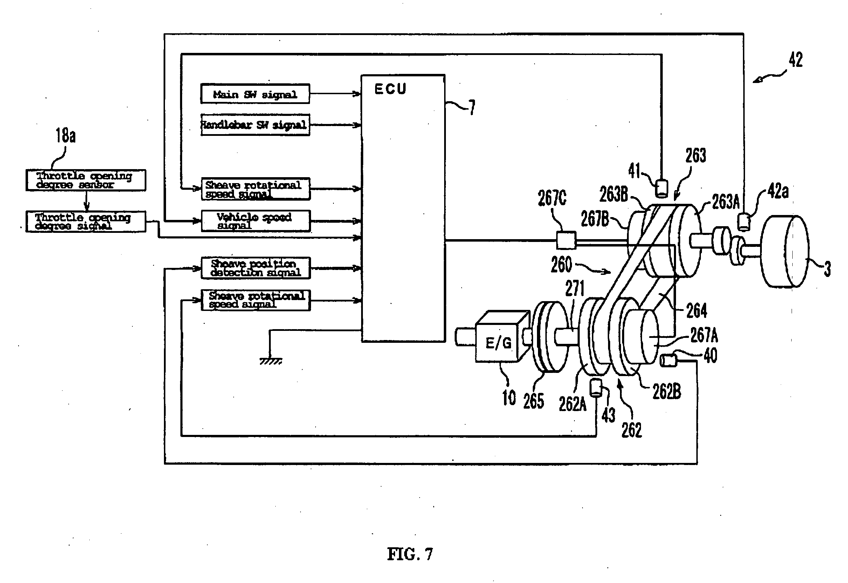

FIG. 7 is a block diagram illustrating a system for controlling the two-wheeled motorized vehicle in accordance with a second embodiment (embodiment 2). In embodiment 2, variable transmission 260 is a belt type ECVT. However, the belt of the variable transmission 260 in accordance with embodiment 2 is a so-called metal belt 264.

The actuator of ECVT in embodiment 1 is the electric motor 30. However, the actuator of ECVT is not limited to the electric motor 30. The actuator of ECVT in the embodiment 2 described below is a hydraulic actuator.

In embodiment 1, the clutch is a centrifugal clutch 25 which is located between the output shaft 22d of the variable transmission 20 and the rear wheel (that is the drive wheel) 3 and mechanically engaged or disengaged depending on the rotational speed of the output shaft 22d. However, the clutch in accordance with embodiment 2 is located between the engine 10 and the input shaft 271 of the variable transmission 260 and controlled to be engaged or disengaged depending on the rotational speed of the engine 10. Specifically, in the embodiment 2, the electrically controlled multiple friction clutch 265 is used as a clutch.

As shown in FIG. 7, the two-wheeled motorized vehicle in embodiment 2 includes the electrically controlled multiple friction clutch 265 and the ECVT type variable transmission 260. The variable transmission 260 includes the primary sheave 262, the secondary sheave 263, and the metal belt 264 wound around the primary sheave 262 and the secondary sheave 263. The primary sheave 262 includes the fixed sheave half 262A and the movable sheave half 262B. The secondary sheave 263 includes the fixed sheave half 263A and the movable sheave half 263B.

A primary sheave rotation sensor 43 is equipped to the primary sheave 262. A secondary sheave rotation sensor 41 is equipped to the secondary sheave 263.

The two-wheeled motorized vehicle includes as a hydraulic actuator a hydraulic cylinder 267A, a hydraulic cylinder 267B, and a hydraulic control valve 267C connected to the hydraulic cylinder 267A and 267B. The hydraulic cylinder 267A adjusts the groove width of the primary sheave 262 by driving the movable sheave half 262B of the primary sheave 262. The hydraulic cylinder 267B adjusts the groove width of the secondary sheave 263 by driving the movable sheave half 263B of the secondary sheave 263. The hydraulic control valve 267C is a valve that adjusts the hydraulic pressure applied to the hydraulic cylinder 267A and 267B. The hydraulic control valve 267C controls the hydraulic cylinder 267A and 267B so that when hydraulic pressure of either one of the hydraulic cylinder 267A and 267B becomes high, the hydraulic pressure of the other one becomes low. This hydraulic control valve 267C is controlled by ECU7.

The multiple friction clutch 265 is located between the engine 10 and the input shaft 271 of the variable transmission 260, and controlled to be engaged or disengaged depending on the rotational speed of the engine 10 (hereafter referred to as "engine speed"). For example, the multiple friction clutch 265 is controlled to be engaged when the engine speed exceeds the predetermined value or higher and on the other hand controlled to be disengaged when the engine speed is below the predetermined value.

The same control as in embodiment 1 is also performed in embodiment 2. Generally, the same abnormality determination as in the embodiment 1 is also performed in the embodiment 2. In embodiment 1, the predetermined rotational speed R₁ of the output shaft 22d (see step S1 in FIG. 6.) is, for example, set to the rotational speed in which the centrifugal clutch 25 is engaged, or higher. In the same way, in embodiment 2, the predetermined rotational speed R₁ is preferably set to the rotational speed in which the clutch 265 is engaged, or higher. Also in embodiment 2, the slipping clutch determination of the clutch 265 is performed in step S11. If the clutch 265 is determined as slipping, it is preferred to proceed to step S12 and perform the full stall limit control.

The same effect as in embodiment 1 can be obtained in embodiment 2.

### Other Variations

The vehicle in the invention is not limited to a so-called scooter-type two-wheeled motorized vehicle. For example, the vehicle in the present invention may be a two-wheeled motorized vehicle other than a scooter-type vehicle. Specifically, the vehicle in the invention may be an off-road type, a motorcycle type, a scooter type or a so-called moped type two-wheeled motorized vehicle. Also, other than a two-wheeled motorized vehicle, the vehicle in the invention may be a straddle-type vehicle. Specifically, the vehicle in the invention may be an all terrain vehicle (ATV) or other types of vehicle. Further, the vehicle in the invention may be a vehicle other than a straddle type vehicle, such as a four-wheeled motorized vehicle.

The change-gear mechanism 20a is not limited to a belt-type ECVT. For example, the change-gear mechanism 20a may be a toroidal type ECVT. Alternatively, the change-gear mechanism 20a may be an electronically-controlled change-gear mechanism other than the ECVT.

The input shaft 21d of the continuously variable transmission 20 may be directly connected to the engine 10 as a driving source, as described in embodiment 1. Alternatively, the input shaft 21d of the continuously variable transmission 20 may be indirectly connected to the engine 10 via another member.

As described in embodiment 1, the output shaft 22d of the continuously variable transmission 20 may be indirectly connected to the rear wheel 3 as a drive wheel via the driven shaft 27, the speed reducing mechanism 28, the axle 29 and the like. Alternatively, the output shaft 22d of the continuously variable transmission 20 may be directly connected to the drive wheel or the rear wheel 3.

In embodiments of the invention, examples are described in which an abnormality in the vehicle speed detection system 42 is detected based on the rotational speed of the secondary sheave 22, which is detected by the secondary sheave rotation sensor 41, and based on the vehicle speed signal, which is outputted from the vehicle speed detection system 42. However, the invention is not limited to this. For example, instead of the rotational speed of the secondary sheave 22, the rotational speed of the engine 10 or the rotational speed of the input shaft may be used as a criterion for detecting an abnormality in the vehicle speed detection system 42. Alternatively, at least two values from the rotational speed of the engine 10, the rotational speed of the input shaft, and the rotational speed of the output shaft may be used as a criterion for detecting an abnormality in the vehicle speed detection system 42. In addition, the rotational speed of the output shaft may be calculated, for example, by multiplying the rotational speed of the engine 10 or the rotational speed of the input shaft by the change-gear ratio.

In addition, in embodiment 1, the description is based on the example in which in step S1, a determination is made whether or not the rotational speed of the secondary sheave 22 is equal to or higher than a predetermined rotational speed R₁, and the vehicle speed is kept equal to or lower than r₁ for a given time period or longer. However, in place of the above conditions, a different condition may be employed. That is, a value, which is obtained by dividing any one of the rotational speed of the engine 10, the rotational speed of the input shaft 21d, and the rotational speed of the output shaft 22d by the vehicle speed, is equal to or smaller than a predetermined value. Specifically, a condition that: a value, which is obtained by dividing the rotational speed of the secondary sheave 22 by the vehicle speed, is equal to or smaller than a predetermined value, may be employed.

In embodiments of the invention, examples are described in which when an abnormality in the vehicle speed detection system 42 is detected, the caution lamp 50 illuminates. Alternatively, when an abnormality in the vehicle speed detection system 42 is detected, the caution lamp 50 may flash.

The invention does not limit the driving source to the engine. For example, the driving source may comprise an electric motor.

In embodiments of the invention, after the output of the engine 10 is decreased in step S12a, the output of the engine 10 is recovered in step S12c. Alternatively, in step S12a, the engine 10 may be stopped to skip steps S12b and S12c.

In embodiment 1 of the invention, in step S11 and step S12b, the slipping centrifugal clutch 25 is detected based on the throttle opening and the vehicle speed. Alternatively, for example, in place of the condition that: the throttle opening is equal to or greater than a predetermined opening Th₁, a different condition may be defined, that is, an amount of fuel to be supplied to the engine 10 is equal to or larger than a predetermined amount. Further alternatively, the condition that the throttle opening is equal to or greater than a predetermined opening Th₁ may be replaced with a condition that the ignition timing in the engine 10 is more advanced than a predetermined ignition timing.

In place of the centrifugal clutch 25, another clutch may be provided, which is regulated by an actuator or the like such that the clutch is engaged or disengaged in accordance with a detection value of the rotational speed of the engine 10.

The condition "the vehicle speed is substantially zero" refers to a vehicle speed at which a vehicle is determined to be substantially at a halt. In other words, the condition "the vehicle speed is substantially zero" refers to a vehicle speed at which a vehicle is determined not to be substantially running. Specifically, an upper limit of the vehicle speed determined to "be substantially zero" may be preset as appropriate within a speed range of 10km/h or lower. For example, the condition "the vehicle speed is substantially zero" may be defined as a vehicle speed, detected by the vehicle speed detection system, of 5km/h or lower. Alternatively, for example, the condition "the vehicle speed is substantially zero" may be defined as a vehicle speed, detected by the vehicle speed detection system, of 2km/h or lower.

The term "be connected" means both directly connected and indirectly connected via other members.

The term "vehicle speed detection system" refers to an entire mechanism for detecting a vehicle speed. Specifically, in the embodiment of the invention, the "vehicle speed detection system" includes the vehicle speed sensor 42a for detecting a vehicle speed, the ECU 7, and the wiring (not shown) for connecting the vehicle speed sensor 42a and the ECU 7.

The expression "the output of the engine is decreased" also means that the engine is stopped.

The term "slipping centrifugal clutch" means that two engaged/disengaged clutch members are sliding. This specifically means in the embodiment of the invention that the clutch housing 25c and the centrifugal weight 25b are sliding.

The condition "the centrifugal clutch is engaged" may include half-clutch state or may not include half-clutch state, depending on the vehicle applying the invention.

The present invention is useful for a vehicle with an ECVT mounted.

### Description of Reference Numerals

- 1: two-wheeled motorized vehicle
- 2: engine unit
- 3: rear wheel (drive wheel)
- 7: ECU (control unit)
- 9: center stand
- 10: engine
- 11: crankshaft
- 18a: throttle opening sensor
- 20: continuously variable transmission
- 21: primary sheave
- 21d: input shaft
- 22: secondary sheave
- 22d: output shaft
- 23: V-belt
- 25: centrifugal clutch
- 40: sheave position sensor
- 41: secondary sheave rotation sensor
- 42: vehicle speed detection system
- 42a: vehicle speed sensor
- 43: primary sheave rotation sensor
- 50: caution lamp

## Claims

1. A controller for a vehicle (1) having:
a drive wheel (3);
a driving source (10) for producing a rotational force;
a continuously variable transmission (20) having an input shaft (21d) connected to the driving source (10) and an output shaft (22d) connected to the drive wheel (3), in which a change-gear ratio between the input shaft (21d) and the output shaft (22d) is electronically controlled;
a vehicle speed detection system (42) for outputting a vehicle speed signal; and
a rotational speed sensor for detecting at least one of a rotational speed of the driving source (10), a rotational speed of the input shaft (21d) or a rotational speed of the output shaft (22d); **characterized in that** :
an abnormality in the vehicle speed detection system (42) is detected independent of the change gear ratio based on the vehicle speed signal outputted from the vehicle speed detection system (42) and at least one value from a rotational speed of the driving source (10), a rotational speed of the input shaft (21d), and a rotational speed of the output shaft (22d); and
an abnormality in the vehicle speed detection system (42) is detected when the rotational speed detected by the rotational speed sensor is equal to or higher than a predetermined rotational speed, and no vehicle speed signal has been substantially outputted from the vehicle speed detection system (42) for a given period of time.

2. A vehicle (1) comprising:
a drive wheel (3);
a driving source (10) for producing a rotational force;
a continuously variable transmission (20) having an input shaft (21d) connected to the driving source (10) and an output shaft (22d) connected to the drive wheel (3), wherein a change-gear ratio between the input shaft (21d) and the output shaft (22d) is electronically controlled; and
a vehicle speed detection system (42) for outputting a vehicle speed signal;
a rotational speed sensor for detecting at least one of a rotational speed of the driving source (10), a rotational speed of the input shaft (21d), or a rotational speed of the output shaft (22d); and
a control unit (7) according to claim 1.

3. The vehicle (1) according to claim 2, wherein the control unit (7) detects an abnormality in the vehicle speed detection system (42) when a value, obtained by dividing the vehicle speed by the rotational speed detected by the rotational speed sensor, is kept equal to or smaller than a predetermined value for a given period of time.

4. The vehicle (1) according to Claim 2. or Claim 3, wherein the vehicle speed detection system (42) has a vehicle speed sensor (42a) for detecting a rotational speed of the drive wheel (3), and outputs a vehicle speed signal in accordance with the rotational speed of the drive wheel (3).

5. The vehicle (1) according to any of Claims 2 to 4,
further comprising a stand (9) for lifting the drive wheel (3) off the ground.

6. The vehicle (1) according to any of Claims 2 to 5,
further comprising a clutch (25) located between the output shaft (22d) and the drive wheel (3), the clutch (25) being engaged or disengaged depending on the rotational speed of the output shaft (22d),
wherein the rotational speed sensor detects a rotational speed of the output shaft (22d), and
the predetermined rotational speed is a rotational speed at which the clutch (25) is engaged.

7. The vehicle (1) according to any of Claims 2 to 6,
further comprising a caution lamp (50),
wherein the control unit (7) causes the caution lamp (50) to illuminate or flash, when detecting an abnormality in the vehicle speed detection system (42).

8. The vehicle (1) according to any of claims 2 to 7,
wherein after detecting an abnormality in the vehicle speed detection system (42), the control unit (7) detects that the vehicle speed detection system (42) is turned normal based on the vehicle speed signal outputted from the vehicle speed detection system (42).

9. The vehicle (1) according to any of claims 2 to 8,
further comprising a clutch (25) located between the output shaft (22d) and the drive wheel (3),
wherein after detecting an abnormality in the vehicle speed detection system (42), the control unit (7) decreases an output of the driving source (10) if a slippage of the clutch (25) is detected.

10. The vehicle (1) according to Claim 9,
wherein the clutch (25) is engaged or disengaged depending on the rotational speed of the output shaft (22d), and
the control unit (7) decreases the output of the driving source (10) only if the rotational speed of the output shaft (22d) is equal to or higher than a rotational speed at which the clutch (25) is engaged.

11. The vehicle (1) according to Claim 9 or 10,
further comprising a throttle to control the output of the driving source (10),
wherein the control unit (7) detects a slippage of the clutch (25) if the vehicle speed is equal to or lower than a predetermined vehicle speed, and a throttle opening is kept equal to or greater than a predetermined opening for a given period of time.

12. The vehicle (1) according to Claim 9 or 10,
further comprising a throttle to control the output of the driving source (10),
wherein the control unit (7) causes the output of the driving source (10) to recover, after detecting a slippage of the clutch (25), if the throttle opening is equal to or smaller than the predetermined opening or if the vehicle speed is higher than the predetermined vehicle speed.

13. The vehicle (1) according to any of Claims 2 to 12,
further comprising a clutch (265) located between the driving source (10) and the input shaft (21d), the clutch (265) being engaged or disengaged depending on the rotational speed of the driving source (10),
wherein the rotational speed sensor detects a rotational speed of the output shaft (22d), and
the predetermined rotational speed is a rotational speed at which the clutch (265) is engaged.

14. The vehicle (1) according to any one of Claims 2 to 5,
further comprising a clutch (265) located between the driving source (10) and the input shaft (21d),
wherein after detecting an abnormality in the vehicle speed detection system (42), the control unit (7) decreases an output of the driving source (10) if a slippage of the clutch (265) is detected.

15. The vehicle (1) according to Claim 4,
wherein the clutch (265) is engaged or disengaged depending on the rotational speed of the output shaft (22d), and
the control unit (7) decreases the output of the driving source (10) only if the rotational speed of the driving source (10) is equal to or higher than a rotational speed at which the clutch (265) is engaged.

16. The vehicle (1) according to Claim 14 or 15,
further comprising a throttle to control the output of the driving source (10),
the control unit (7) detects a slippage of the clutch (265) if the vehicle speed is equal to or lower than a predetermined vehicle speed, and the throttle opening is kept equal to or greater than a predetermined opening for a given period of time.

17. The vehicle (1) according to Claim 14 or 15,
further comprising a throttle to control the output of the driving source (10),
after detecting a slippage of the clutch (265), the control unit (7) causes the output of the driving source (10) to recover if the throttle opening is equal to or smaller than the predetermined opening or the vehicle speed is higher than the predetermined vehicle speed.

18. A method of detecting an abnormality in a vehicle (1) having:
a drive wheel (3);
a driving source (10) for producing a rotational force;
a continuously variable transmission (20) having an input shaft (21d) connected to the driving source (10) and an output shaft (22d) connected to the drive wheel (3), in which a change-gear ratio between the input shaft (21d) and the output shaft (22d) is electronically controlled;
a vehicle speed detection system (42) for outputting a vehicle speed signal; and
a rotational speed sensor for detecting at least one of a rotational speed of the driving source (10), a rotational speed of the input shaft (21d), or a rotational speed of the output shaft (22d);
wherein an abnormality in the vehicle speed detection system (42) is detected independent of the change gear ratio based on the vehicle speed signal outputted from the vehicle speed detection system (42) and at least one of a rotational speed of the driving source (10), a rotational speed of the input shaft (21d), and a rotational speed of the output shaft (22d); and
an abnormality in the vehicle speed detection system (42) is detected when the rotational speed detected by the rotational speed sensor is equal to or higher than a predetermined rotational speed, and no vehicle speed signal has been substantially outputted from the vehicle speed detection system (42) for a given period of time.

## Patentansprüche

1. Steuereinrichtung für ein Fahrzeug (1), umfassend:
ein Antriebsrad (3);
eine Antriebsquelle (10) zur Erzeugung einer Drehkraft;
ein stufenloses Getriebe (20) mit einer Eingangswelle (21d), die mit der Antriebsquelle (10) verbunden ist, und einer Ausgangswelle (22d), die mit dem Antriebsrad (3) verbunden ist, wobei in dem stufenlosen Getriebe (20) ein Übersetzungsverhältnis zwischen der Eingangswelle (21d) und der Ausgangswelle (22d) elektronisch gesteuert wird;
ein Fahrzeuggeschwindigkeitsermittlungssystem (42) zum Ausgeben eines Fahrzeuggeschwindigkeitssignals; und
einen Drehzahlsensor zur Ermittlung mindestens eines von Folgendem: einer Drehzahl der Antriebsquelle (10), einer Drehzahl der Eingangswelle (21d) oder einer Drehzahl der Ausgangswelle (22d);
**dadurch gekennzeichnet, dass**
eine Abnormität im Fahrzeuggeschwindigkeitsermittlungssystem (42) unabhängig vom Übersetzungsverhältnis ermittelt wird auf der Grundlage des vom Fahrzeuggeschwindigkeitsermittlungssystem (42) ausgegebenen Fahrzeuggeschwindigkeitssignals und mindestens eines Wertes aus einer Drehzahl der Antriebsquelle (10), einer Drehzahl der Eingangswelle (21d) und/oder einer Drehzahl der Ausgangswelle (22d); und
eine Abnormität im Fahrzeuggeschwindigkeitsermittlungssystem (42) ermittelt wird, wenn die durch den Drehzahlsensor ermittelte Drehzahl größer oder gleich einer vorbestimmten Drehzahl ist und vom Fahrzeuggeschwindigkeitsermittlungssystem (42) für einen gegebenen Zeitraum im Wesentlichen kein Fahrzeuggeschwindigkeitssignal ausgegeben worden ist.

2. Fahrzeug (1), umfassend:
ein Antriebsrad (3);
eine Antriebsquelle (10) zur Erzeugung einer Drehkraft;
ein stufenloses Getriebe (20) mit einer Eingangswelle (21d), die mit der Antriebsquelle (10) verbunden ist, und einer Ausgangswelle (22d), die mit dem Antriebsrad (3) verbunden ist, wobei ein Übersetzungsverhältnis zwischen der Eingangswelle (21d) und der Ausgangswelle (22d) elektronisch gesteuert wird; und
ein Fahrzeuggeschwindigkeitsermittlungssystem (42) zum Ausgeben eines Fahrzeuggeschwindigkeitssignals;
einen Drehzahlsensor zur Ermittlung mindestens eines von Folgendem: einer Drehzahl der Antriebsquelle (10), einer Drehzahl der Eingangswelle (21d) oder einer Drehzahl der Ausgangswelle (22d); und
eine Steuereinheit (7) nach Anspruch 1.

3. Fahrzeug (1) nach Anspruch 2, wobei die Steuereinheit (7) eine Abnormität im Fahrzeuggeschwindigkeitsermittlungssystem (42) ermittelt, wenn ein Wert, der durch Division der Fahrzeuggeschwindigkeit durch die vom Drehzahlsensor ermittelte Drehzahl errechnet wird, für einen gegebenen Zeitraum kleiner oder gleich einem vorbestimmten Wert bleibt.

4. Fahrzeug (1) nach Anspruch 2 oder 3, wobei das Fahrzeuggeschwindigkeitsermittlungssystem (42) einen Fahrzeuggeschwindigkeitssensor (42a) zur Ermittlung einer Drehzahl des Antriebsrades (3) hat und ein Fahrzeuggeschwindigkeitssignal gemäß der Drehzahl des Antriebsrades (3) ausgibt.

5. Fahrzeug (1) nach einem der Ansprüche 2 bis 4,
ferner umfassend einen Ständer (9) zum Abheben des Antriebsrades (3) vom Boden.

6. Fahrzeug (1) nach einem der Ansprüche 2 bis 5,
ferner umfassend eine Kupplung (25), die sich zwischen der Ausgangswelle (22d) und dem Antriebsrad (3) befindet, wobei die Kupplung (25) in Abhängigkeit von der Drehzahl der Ausgangswelle (22d) ein- oder ausgerückt ist,
wobei der Drehzahlsensor eine Drehzahl der Ausgangswelle (22d) ermittelt und
die vorbestimmte Drehzahl eine Drehzahl ist, bei der die Kupplung (25) eingerückt ist.

7. Fahrzeug (1) nach einem der Ansprüche 2 bis 6,
ferner umfassend eine Warnlampe (50),
wobei die Steuereinheit (7) bewirkt, dass die Warnlampe (50) leuchtet oder blinkt, wenn eine Abnormität im Fahrzeuggeschwindigkeitsermittlungssystem (42) ermittelt wird.

8. Fahrzeug (1) nach einem der Ansprüche 2 bis 7,
wobei nach der Ermittlung einer Abnormität im Fahrzeuggeschwindigkeitsermittlungssystem (42) die Steuereinheit (7) ermittelt, dass das Fahrzeuggeschwindigkeitsermittlungssystem (42) sich aufgrund des vom Fahrzeuggeschwindigkeitsermittlungssystem (42) ausgegebenen Fahrzeuggeschwindigkeitssignals normalisiert hat.

9. Fahrzeug (1) nach einem der Ansprüche 2 bis 8,
ferner umfassend eine Kupplung (25), die sich zwischen der Ausgangswelle (22d) und dem Antriebsrad (3) befindet,
wobei nach der Ermittlung einer Abnormität im Fahrzeuggeschwindigkeitsermittlungssystem (42) die Steuereinheit (7) eine abgegebene Leistung der Antriebsquelle (10) verringert, wenn ein Schlupf der Kupplung (25) ermittelt wird.

10. Fahrzeug (1) nach Anspruch 9,
wobei die Kupplung (25) in Abhängigkeit von der Drehzahl der Ausgangswelle (22d) ein- oder ausgerückt ist und
der Steuereinheit (7) die abgegebene Leistung der Antriebsquelle (10) nur dann verringert, wenn die Drehzahl der Ausgangswelle (22d) größer oder gleich einer Drehzahl ist, bei der die Kupplung (25) eingerückt ist.

11. Fahrzeug (1) nach Anspruch 9 oder 10,
ferner umfassend eine Drosselklappe, um die abgegebene Leistung der Antriebsquelle (10) zu steuern,
wobei die Steuereinheit (7) einen Schlupf der Kupplung (25) ermittelt, wenn die Fahrzeuggeschwindigkeit kleiner oder gleich einer vorbestimmten Fahrzeuggeschwindigkeit ist und eine Drosselklappenöffnung für einen gegebenen Zeitraum größer oder gleich einer vorbestimmten Öffnung bleibt.

12. Fahrzeug (1) nach Anspruch 9 oder 10,
ferner umfassend eine Drosselklappe, um die abgegebene Leistung der Antriebsquelle (10) zu steuern,
wobei die Steuereinheit (7) nach der Ermittlung eines Schlupfes der Kupplung (25) bewirkt, dass die abgegebene Leistung der Antriebsquelle (10) wiederhergestellt wird, wenn die Drosselklappenöffnung kleiner oder gleich der vorbestimmten Öffnung ist oder wenn die Fahrzeuggeschwindigkeit größer ist als die vorbestimmte Fahrzeuggeschwindigkeit.

13. Fahrzeug (1) nach einem der Ansprüche 2 bis 12,
ferner umfassend eine Kupplung (265), die sich zwischen der Antriebsquelle (10) und der Eingangswelle (21d) befindet, wobei die Kupplung (265) in Abhängigkeit von der Drehzahl der Ausgangswelle (22d) ein- oder ausgerückt ist,
wobei der Drehzahlsensor eine Drehzahl der Ausgangswelle (22d) ermittelt und
die vorbestimmte Drehzahl eine Drehzahl ist, bei der die Kupplung (265) eingerückt ist.

14. Fahrzeug (1) nach einem der Ansprüche 2 bis 5,
ferner umfassend eine Kupplung (265), die sich zwischen der Antriebsquelle (10) und der Eingangswelle (21d) befindet,
wobei nach der Ermittlung einer Abnormität im Fahrzeuggeschwindigkeitsermittlungssystem (42) die Steuereinheit (7) eine abgegebene Leistung der Antriebsquelle (10) verringert, wenn ein Schlupf der Kupplung (265) ermittelt wird.

15. Fahrzeug (1) nach Anspruch 4,
wobei die Kupplung (265) in Abhängigkeit von der Drehzahl der Ausgangswelle (22d) ein- oder ausgerückt ist und
die Steuereinheit (7) die abgegebene Leistung der Antriebsquelle (10) nur dann verringert, wenn die Drehzahl der Antriebsquelle (10) größer oder gleich einer Drehzahl ist, bei der die Kupplung (265) eingerückt ist.

16. Fahrzeug (1) nach Anspruch 14 oder 15,
ferner umfassend eine Drosselklappe, um die abgegebene Leistung der Antriebsquelle (10) zu steuern,
wobei die Steuereinheit (7) einen Schlupf der Kupplung (265) ermittelt, wenn die Fahrzeuggeschwindigkeit kleiner oder gleich einer vorbestimmten Fahrzeuggeschwindigkeit ist und die Drosselklappenöffnung für einen gegebenen Zeitraum größer oder gleich einer vorbestimmten Öffnung bleibt.

17. Fahrzeug (1) nach Anspruch 14 oder 15,
ferner umfassend eine Drosselklappe, um die abgegebene Leistung der Antriebsquelle (10) zu steuern,
wobei nach der Ermittlung eines Schlupfes der Kupplung (265) die Steuereinheit (7) bewirkt, dass die abgegebene Leistung der Antriebsquelle (10) wiederhergestellt wird, wenn die Drosselöffnung kleiner oder gleich der vorbestimmten Öffnung ist oder die Fahrzeuggeschwindigkeit größer ist als die vorbestimmte Fahrzeuggeschwindigkeit.

18. Verfahren zur Ermittlung einer Abnormität in einem Fahrzeug (1) mit:
einem Antriebsrad (3),
einer Antriebsquelle (10) zur Erzeugung einer Drehkraft;
einem stufenlosen Getriebe (20) mit einer Eingangswelle (21d), die mit der Antriebsquelle (10) verbunden ist, und einer Ausgangswelle (22d), die mit dem Antriebsrad (3) verbunden ist, wobei ein Übersetzungsverhältnis zwischen der Eingangswelle (21d) und der Ausgangswelle (22d) elektronisch gesteuert wird;
einem Fahrzeuggeschwindigkeitsermittlungssystem (42) zum Ausgeben eines Fahrzeuggeschwindigkeitssignals; und
einem Drehzahlsensor zur Ermittlung mindestens eines von Folgendem: einer Drehzahl der Antriebsquelle (10), einer Drehzahl der Eingangswelle (21d) oder einer Drehzahl der Ausgangswelle (22d);
wobei eine Abnormität im Fahrzeuggeschwindigkeitsermittlungssystem (42) unabhängig vom Übersetzungsverhältnis ermittelt wird auf der Grundlage des vom Fahrzeuggeschwindigkeitsermittlungssystem (42) ausgegebenen Fahrzeuggeschwindigkeitssignals und mindestens eines von Folgendem: einer Drehzahl der Antriebsquelle (10), einer Drehzahl der Eingangswelle (21d) oder einer Drehzahl der Ausgangswelle (22d); und
eine Abnormität im Fahrzeuggeschwindigkeitsermittlungssystem (42) ermittelt wird, wenn die durch den Drehzahlsensor ermittelte Drehzahl größer oder gleich einer vorbestimmten Drehzahl ist und vom Fahrzeuggeschwindigkeitsermittlungssystem (42) für einen gegebenen Zeitraum im Wesentlichen kein Fahrzeuggeschwindigkeitssignal ausgegeben worden ist.

## Revendications

1. Unité de commande pour un véhicule (1) ayant :
une roue motrice (3) ;
une source d'entraînement (10) pour produire une force de rotation ;
une transmission à variation continue (20) ayant un arbre d'entrée (21d) raccordé à la source d'entraînement (10) et un arbre de sortie (22d) raccordé à la roue motrice (3), un rapport de changement de vitesse entre l'arbre d'entrée (21d) et l'arbre de sortie (22d) étant commandé électroniquement ;
un système de détection de vitesse de véhicule (42) pour produire en sortie un signal de vitesse de véhicule ; et
un capteur de vitesse de rotation pour détecter au moins l'une d'une vitesse de rotation de la source d'entraînement (10), d'une vitesse de rotation de l'arbre d'entrée (21d) ou d'une vitesse de rotation de l'arbre de sortie (22d) ;
**caractérisée en ce que** :
une anomalie du système de détection de vitesse de véhicule (42) est détectée indépendamment du rapport de changement de vitesse sur la base du signal de vitesse de véhicule produit en sortie par le système de détection de vitesse de véhicule (42) et d'au moins une valeur issue d'une vitesse de rotation de la source d'entraînement (10), d'une vitesse de rotation de l'arbre d'entrée (21d) et d'une vitesse de rotation de l'arbre de sortie (22d) ; et
une anomalie du système de détection de vitesse de véhicule (42) est détectée lorsque la vitesse de rotation détectée par le capteur de vitesse de rotation est supérieure ou égale à une vitesse de rotation prédéterminée, et aucun signal de vitesse de véhicule n'a été sensiblement produit en sortie par le système de détection de vitesse de véhicule (42) pour une période de temps donnée.

2. Véhicule (1) comprenant :
une roue motrice (3) ;
une source d'entraînement (10) pour produire une force de rotation ;
une transmission à variation continue (20) ayant un arbre d'entrée (21d) raccordé à la source d'entraînement (10) et un arbre de sortie (22d) raccordé à la roue motrice (3), un rapport de changement de vitesse entre l'arbre d'entrée (21d) et l'arbre de sortie (22d) étant commandé électroniquement ; et
un système de détection de vitesse de véhicule (42) pour produire en sortie un signal de vitesse de véhicule ;
un capteur de vitesse de rotation pour détecter au moins l'une d'une vitesse de rotation de la source d'entraînement (10), d'une vitesse de rotation de l'arbre d'entrée (21d) ou d'une vitesse de rotation de l'arbre de sortie (22d) ; et
une unité de commande (7) selon la revendication 1.

3. Véhicule (1) selon la revendication 2, dans lequel l'unité de commande (7) détecte une anomalie du système de détection de vitesse de véhicule (42) lorsqu'une valeur, obtenue en divisant la vitesse du véhicule par la vitesse de rotation détectée par le capteur de vitesse de rotation, est maintenue inférieure ou égale à une valeur prédéterminée pendant une période de temps donnée.

4. Véhicule (1) selon la revendication 2 ou la revendication 3, dans lequel le système de détection de vitesse de véhicule (42) possède un capteur de vitesse de véhicule (42a) pour détecter une vitesse de rotation de la roue motrice (3), et produit en sortie un signal de vitesse de véhicule conformément à la vitesse de rotation de la roue motrice (3).

5. Véhicule (1) selon l'une quelconque des revendications 2 à 4,
comprenant en outre une béquille (9) pour soulever la roue motrice (3) du sol.

6. Véhicule (1) selon l'une quelconque des revendications 2 à 5,
comprenant en outre un embrayage (25) situé entre l'arbre de sortie (22d) et la roue motrice (3), l'embrayage (25) étant engagé ou désengagé selon la vitesse de rotation de l'arbre de sortie (22d),
dans lequel le capteur de vitesse de rotation détecte une vitesse de rotation de l'arbre de sortie (22d), et
la vitesse de rotation prédéterminée est une vitesse de rotation à laquelle l'embrayage (25) est engagé.

7. Véhicule (1) selon l'une quelconque des revendications 2 à 6,
comprenant en outre un voyant d'avertissement (50),
dans lequel l'unité de commande (7) provoque l'allumage ou le clignotement du voyant d'avertissement (50) lors de la détection d'une anomalie du système de détection de vitesse de véhicule (42).

8. Véhicule (1) selon l'une quelconque des revendications 2 à 7,
dans lequel après détection d'une anomalie du système de détection de vitesse du véhicule (42), l'unité de commande (7) détecte que le système de détection de vitesse de véhicule (42) est rendu normal sur la base du signal de vitesse de véhicule produit en sortie par le système de détection de vitesse de véhicule (42).

9. Véhicule (1) selon l'une quelconque des revendications 2 à 8,
comprenant en outre un embrayage (25) situé entre l'arbre de sortie (22d) et la roue motrice (3),
dans lequel après détection d'une anomalie du système de détection de vitesse (42), l'unité de commande (7) réduit un rendement issu de la source d'entraînement (10) si un patinage de l'embrayage (25) est détecté.

10. Véhicule (1) selon la revendication 9,
dans lequel l'embrayage (25) est engagé ou désengagé en fonction de la vitesse de rotation de l'arbre de sortie (22d), et
l'unité de commande (7) réduit le rendement issu de la source d'entraînement (10) uniquement si la vitesse de rotation de l'arbre de sortie (22d) est supérieure ou égale à une vitesse de rotation à laquelle l'embrayage (25) est engagé.

11. Véhicule (1) selon la revendication 9 ou 10,
comprenant en outre un papillon pour contrôler le rendement issu de la source d'entraînement (10),
dans lequel l'unité de commande (7) détecte un patinage de l'embrayage (25) si la vitesse du véhicule est inférieure ou égale à une vitesse de véhicule prédéterminée, et une ouverture de papillon est maintenue supérieure ou égale à une ouverture prédéterminée pendant une période de temps donnée.

12. Véhicule (1) selon la revendication 9 ou 10,
comprenant en outre un papillon pour contrôler le rendement issu de la source d'entraînement (10),
dans lequel l'unité de commande (7) provoque le rétablissement du rendement issu de la source d'entraînement (10) après détection d'un patinage de l'embrayage (25) si l'ouverture du papillon est inférieure ou égale à l'ouverture prédéterminée ou si la vitesse du véhicule est supérieure à la vitesse de véhicule prédéterminée.

13. Véhicule (1) selon l'une quelconque des revendications 2 à 12,
comprenant en outre un embrayage (265) situé entre la source d'entraînement (10) et l'arbre d'entrée (21d), l'embrayage (265) étant engagé ou désengagé en fonction de la vitesse de rotation de la source d'entraînement (10),
dans lequel le capteur de vitesse de rotation détecte une vitesse de rotation de l'arbre de sortie (22d), et
la vitesse de rotation prédéterminée est une vitesse de rotation à laquelle l'embrayage (265) est engagé.

14. Véhicule (1) selon l'une quelconque des revendications 2 à 5,
comprenant en outre un embrayage (265) situé entre la source d'entraînement (10) et l'arbre d'entrée (21d),
dans lequel après détection d'une anomalie du système de détection de vitesse de véhicule (42), l'unité de commande (7) réduit un rendement issu de la source d'entraînement (10) si un patinage de l'embrayage (265) est détecté.

15. Véhicule (1) selon la revendication 4,
dans lequel l'embrayage (265) est engagé ou désengagé en fonction de la vitesse de rotation de l'arbre de sortie (22d), et
l'unité de commande (7) réduit le rendement issu de la source d'entraînement (10) uniquement si la vitesse de rotation de la source d'entraînement (10) est supérieure ou égale à une vitesse de rotation à laquelle l'embrayage (265) est engagé.

16. Véhicule (1) selon la revendication 14 ou 15,
comprenant en outre un papillon pour contrôler le rendement issu de la source d'entraînement (10),
l'unité de commande (7) détecte un patinage de l'embrayage (265) si la vitesse du véhicule est inférieure ou égale à une vitesse de véhicule prédéterminée, et l'ouverture du papillon est maintenue supérieure ou égale à une ouverture prédéterminée pendant une période de temps donnée.

17. Véhicule (1) selon la revendication 14 ou 15,
comprenant en outre un papillon pour contrôler le rendement issu de la source d'entraînement (10),
après détection d'un patinage de l'embrayage (265), l'unité de commande (7) provoque le rétablissement du rendement issu de la source d'entraînement (10) si l'ouverture du papillon est inférieure ou égale à l'ouverture prédéterminée ou si la vitesse du véhicule est supérieure à la vitesse de véhicule prédéterminée.

18. Procédé de détection d'une anomalie dans un véhicule (1) ayant :
une roue motrice (3) ;
une source d'entraînement (10) pour produire une force de rotation ;
une transmission à variation continue (20) ayant un arbre d'entrée (21d) raccordé à la source d'entraînement (10) et un arbre de sortie (22d) raccordé à la roue motrice (3), un rapport de changement de vitesse entre l'arbre d'entrée (21d) et l'arbre de sortie (22d) étant commandé électroniquement ;
un système de détection de vitesse de véhicule (42) pour produire en sortie un signal de vitesse de véhicule ; et
un capteur de vitesse de rotation pour détecter au moins l'une d'une vitesse de rotation de la source d'entraînement (10), d'une vitesse de rotation de l'arbre d'entrée (21d) ou d'une vitesse de rotation de l'arbre de sortie (22d) ;
dans lequel une anomalie du système de détection de vitesse de véhicule (42) est détectée indépendamment du rapport de changement de vitesse sur la base du signal de vitesse de véhicule produit en sortie par le système de détection de vitesse de véhicule (42) et d'au moins une valeur issue d'une vitesse de rotation de la source d'entraînement (10), d'une vitesse de rotation de l'arbre d'entrée (21d) et d'une vitesse de rotation de l'arbre de sortie (22d) ; et
une anomalie du système de détection de vitesse de véhicule (42) est détectée lorsque la vitesse de rotation détectée par le capteur de vitesse de rotation est supérieure ou égale à une vitesse de rotation prédéterminée, et aucun signal de vitesse de véhicule n'a été sensiblement produit en sortie par le système de détection de vitesse de véhicule (42) pendant une période de temps donnée.
